# EUROPÄISCHE PATENTANMELDUNG

(11) **EP 1 178 286 A2**
(43) Veröffentlichungstag der Anmeldung: **06.02.2002**
(21) Anmeldenummer: 01114102.5
(22) Anmeldetag: 09.06.2001
(51) Int. Cl.: G01C 21/36

(54) **Vorrichtung zur kombinierten Nutzung von Daten und mobile Datenverarbeitungsvorrichtung**

(30) Priorität: 04.08.2000 DE 10038242
(71) Anmelder: Bayerische Motoren Werke Aktiengesellschaft, 80809 München (DE)
(72) Erfinder: Steingrübner, Mihai, 07302 New Jersey (US); Schiffers, Jutta, Dr., 80995 München (DE)

(57) **Zusammenfassung**

Die Erfindung betrifft eine Vorrichtung zur kombinierten Nutzung von Daten mit einer mobilen Datenverarbeitungsvorrichtung für persönliche Daten und einem in einem Fahrzeug fest installierten Bordomputer mit einem Navigationssystem. Beide Datenverarbeitungsvorrichtungen weisen geeignete Schnittstellen zur Kommunikation miteinander auf. In wenigstens einer Datenverarbeitungsvorrichtung ist zumindest eine Assistenzfunktion vorgesehen, die eine Information für einen Benutzer unter Berücksichtigung von Daten aus der anderen Datenverarbeitungsvorrichtung zur Verfügung stellt.

## Beschreibung

Die Erfindung betrifft eine Vorrichtung zur kombinierten Nutzung von Daten mit einer mobilen Datenverarbeitungsvorrichtung für persönliche Daten und einem in einem Fahrzeug fest installierten Bordcomputer mit einem Navigationssystem. Ferner betrifft die Erfindung eine entsprechend ausgebildete mobile Datenverarbeitungsvorrichtung für persönliche Daten.

Momentan existieren auf dem Markt verschiedene Geräte für persönliche Daten, sogenannte Personal Data Assistant (PDA), beispielsweise Handheld-PC oder Palmtop, in verschiedensten Ausstattungsvarianten. Es ist auch bekannt, solche Einzelgeräte mit einem Personalcomputer (PC) zum Datenaustausch zu kombinieren (vgl. dazu US 5,727,202).

Überdies ist aus der US 5,787,373 eine Vorrichtung zur Reisekostenerfassung mit einem mobilen Computer, umfassend einen Speicher, eine Eingabetastatur und einen Bildschirm für die Verwendung in einem Fahrzeug bekannt. Das Fahrzeug stellt Entfernungssignale an den tragbaren Computer bereit, aufgrund welcher Informationen an dem Bildschirm angezeigt werden.

Aus der 5,928,292 ist ein Fahrzeugdatensystem zur Kommunikation mit einem seperat dazu aufgestellten Host bekannt, wobei in dem Fahrzeugsystem ein mobiles Terminal angeordnet ist. Das mobile Terminal ist in einer Halteeinrichtung aufnehmbar und kann darin positioniert Daten mit Mitgliedern eines Netzwerkes austauschen. Diese Anwendung ist auf Logistikzwecke abgestimmt.

In der EP 0 666 198 B1 ist ein Bordcomputer für ein Fahrzeug beschrieben, der aus dem Fahrzeug mitgenommen werden kann, um die darin gespeicherten Daten auch ausserhalb des Fahrzeuges verwenden zu können.

Aufgabe der vorliegenden Erfindung ist es, eine Vorrichtung zur kombinierten Nutzung von Daten der eingangs genannten Art anzugeben, mit denen die persönlichen Daten in einer mobilen Datenverarbeitungsvorrichtung so mit den Daten eines in einem Fahrzeug fest installierten Bordcomputers mit Navigationssystem zu kombinieren sind, dass neue Unterstützungsfunktionen für den Fahrer (Fahrerassistenzsysteme) bereitgestellt werden können.

Diese Aufgabe wird durch die im Anspruch 1 genannten Merkmale gelöst. Zudem würde die Aufgabe durch eine mobile Datenverarbeitungsvorrichtung für persönliche Daten gelöst, wie sie im Anspruch 7 genannt ist.

Bisher standen die Informationen von mobilen Datenverarbeitungsgeräten mit persönlichen Daten, beispielsweise Palmtops, nur in Verbindung mit Personalcomputer oder als Einzelgerät zur Verfügung. Die in einem Terminplaner oder in einem Adressenspeicher aufgenommenen Daten konnten nicht mit den Daten eines Fahrzeugs, insbesondere dessen Navigationsdaten, kombiniert werden, da kein Datenaustausch möglich war. Mit der vorliegenden Erfindung wird die Integration eines eingangs genannten Personal Data Assistant (PDA) in einem Fahrzeug erreicht. Damit ist ein Datenaustausch von im Fahrzeug vorhandenen Informationen mit denjenigen im PDA enthaltenen Informationen möglich, wodurch eine Reihe von zusätzlichen Assistenzfunktionen für einen Fahrer zur Verfügung gestellt werden können. Dazu müssen sowohl die mobile Datenverarbeitungsvorrichtung als auch die fest installierte Datenverarbeitungsvorrichtung in Form des Bordcomputers Hardware- und Softwareschnittstellen aufweisen, die einen Datentransfer zwischen beiden Systemen ermöglichen. Die nachfolgenden Beispiele sollen zeigen, wie insbesondere standardmäßig auf einem Personal-Data-Assistent vorhandene Daten, wie Adressdatenbanken, Terminkalender, etc. mit im Fahrzeug integrierten Systemen verknüpft werden können. Die Verknüpfung wird vorzugsweise durch eine Implementierung von Software realisiert. Dabei kann auch ein Ablauf automatisch, d.h. ohne weitere Interaktion des Fahrers, beispielsweise situativ aus Daten des Fahrzeugs oder denjenigen des Personal Data Assistant durchgeführt werden.

Eine erste Anwendungsmöglichkeit besteht darin, Adressdaten aus dem Adressbuch des Personal Data Assistant in das Navigationssystem des Fahrzeugs zu laden. Diese Adressdaten werden dann im Navigationssystem in Koordinatendaten umgerechnet und abgespeichert. Umgekehrt können die Adressdaten inklusive der Koordinateninformationen aus dem Navigationssystem in das Adressbuch des Personal Data Assistant geladen werden. Damit ist es möglich, eine Eingabe von Zielorten ausserhalb des Fahrzeugs durchzuführen. Dabei kann auch eine Vorabplanung mittels eines PC's vorgenommen und über den PDA in das Navigationssystem eingespielt werden. Die Aktivierung von Zieldaten im Fahrzeugnavigationssystem kann dann durch den Anschluß des Personal Data Assistant an das Fahrzeug gestartet werden. Eine weitere Möglichkeit besteht darin, ein Reisetagebuch zu realisieren, wobei aufgrund der Zeit- und Ortsangaben Einträge im Personal Data Assistant vorgenommen werden. Dazu kann auch die Adressinformation geladen werden.

Insbesondere ist es interessant, in den PDA zusätzlich Notizen einzugeben. Natürlich ist auch das Hinzufügen weiterer Daten, z.B. Bilder einer Digitalkamera oder externe Reiseinformationen, möglich.

Eine weitere Funktionalität kann durch einen sogenannten Karten-Assistant verwirklicht werden, bei dem bestimmte Punkte einer näheren Umgebung (POl = Points of Interest) um einen von einem Benutzer anzugebenen Punkt von dem Navigationssystem in den PDA übertragen werden. Ferner können um eine aktuelle Position herum beispielsweise in einem Umgebungsradius von 3 km interessante Örtlichkeiten, wie Hotels, Restaurants, Museen, Sehenswürdigkeiten etc., möglicherweise mit Symbolen unterlegt, dargestellt werden.

Natürlich können diese Informationen auch anhand einer Karte gezeigt werden.

Überdies ist es möglich, in den PDA eine Umgebungskarte zu laden, so dass diese dann auf dem Display der mobilen Einrichtung zur Verfügung steht. Wird die Karte in Form einer Vektorgrafik übertragen, ist sie zudem noch skalierbar.

Weiter ist es möglich, in dem PDA eine persönliche Standortliste abzulegen. Dabei werden vom Navigationssystem die Standorte des Fahrzeugs aufgenommen und als persönliche Standorte an den PDA übertragen. Zusätzlich können auf einer Umgebungskarte des PDA interaktiv Standorte markiert werden, die ebenfalls in einer persönlichen Standortliste abgespeichert sind. Als Name kann dabei die zugehörige Adresse verwendet werden.

Eine weitere Möglichkeit besteht in der Verwirklichung der Funktionalität eines Tagesplaner. Mit dem im PDA und Fahrzeug gespeicherten Daten, beispielsweise anzufahrende Orte, Routenlänge, durchschnittliche Fahrzeit etc., können Routenplanungen durchgeführt und in einem Terminkalender eingetragen werden. Als Tagesplaner kann beispielsweise der Windows (eingetragenen Warenzeichen) Terminplaner und das Windows-Adressbuch verwendet werden. Bei dem Tagesplaner werden insbesondere die Adressen aus dem Adressbuch mit den Terminen aus dem Terminplaner verknüpft.

Eine weitere Möglichkeit besteht darin, Verspätungen automatisch mitzuteilen oder solche Mitteilungen anzuregen. Dazu vergleicht der PDA Termindaten in dem Tagesplaner mit den von dem Navigationssystem ermittelten Daten und macht beispielsweise die Benutzer auf Verspätungen aufmerksam. Diese Assistenzfunktion sollte frühzeitig genug aktiviert werden. Ist zu dem Zieltermin eine Telefonnummer oder eine Email-Adresse hinterlegt, so kann der Termin damit verknüpft werden und dem Bediener beim Versenden einer Email oder der Aufbau einer Telefonverbindung angeboten werden. Natürlich können Telefonnummern aus dem PDA heraus an den festinstallierten Bordcomputer geschickt werden. Diese werden dann auf einem Bildschirm angezeigt und können aufgerufen werden, wonach beispielsweise ein Telefonassistent die entsprechende Verbindung aufbaut.

Überdies sind noch eine Vielzahl anderer Assistenzfunktionen vorstellbar.

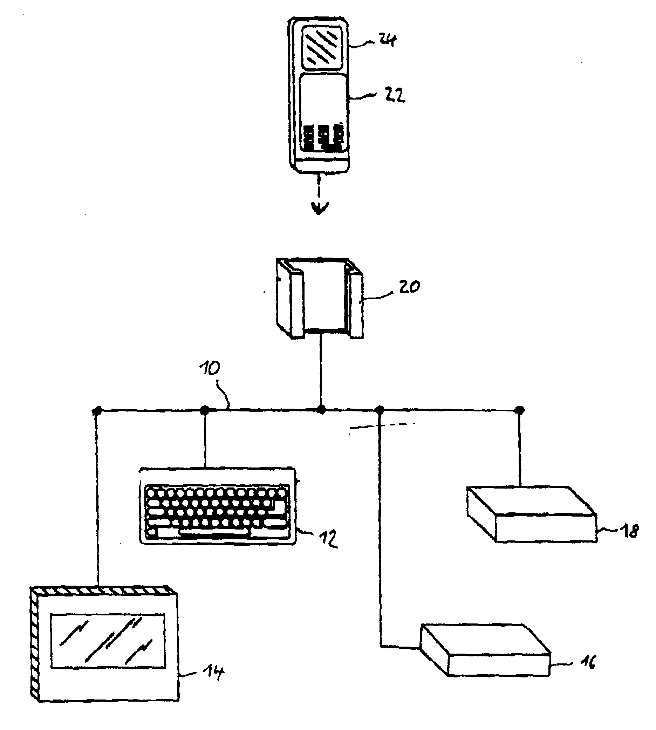

Die Erfindung wird nachfolgend und mit Bezug auf die einzige Zeichnung näher erläutert. Die Zeichnung zeigt in schematischer Weise eine in einem (nicht dargestellten) Fahrzeug angeordnete Datenverarbeitungsvorrichtung mit verschiedenen Teilnehmern, die an einem gemeinsamen Bus 10 angeschlossen sind. Ein erster Teilnehmer ist eine Eingabeeinrichtung 12, die vorliegend als Keyboard dargestellt ist. Jedoch eignet sich jede beliebige Eingabevorrichtung hierfür. Ein zweiter Kommunikationsteilnehmer ist ein Bildschirm 14, an dem die verschiedensten Informationen angezeigt werden. Zudem sind weitere Netzmitglieder vorgesehen, von denen vorliegend nur zwei 16,18 dargestellt sind. Bei dem mit der Bezugsziffer 16 bezeichneten Kommunikationsmitglied handelt es sich um eine Navigationsvorrichtung, die in nicht dargestellter, aber an sich bekannter Weise Standortinformationen über das GPS (Global Positioning System) erhält und aufgrund von beispielsweise auf einer CD-Rom vorliegenden Daten eine Umgebungskarte auf dem Bildschirm 14 darstellen kann. Über die Bedieneinrichtung 12 können für Zielorte Darstellungsweisen und zusätzliche Fahrerinformationen angezeigt werden. Mit der Bezugsziffer 18 ist eine Telefoneinrichtung bezeichnet, welche über nicht dargestellte weitere Elemente eine Verbindung zu einem Mobilnetz aufbauen kann.

An den Bus 10 ist ebenfalls eine Halterung 20 angeschlossen, in die ein Palmtop-Handgerät eingefügt werden kann. Das Palmtop-Handgerät 22 hat insbesondere persönliche Daten gespeichert und weist eine besondere Schnittstelle (nicht dargestellt) auf, so dass mittels der Halterung 20 eine Verbindung zu dem Bus 10 hergestellt werden kann. Neben dieser Hardwareverbindung ist im Palmtop 22 auch noch eine Softwareschnittstelle vorgesehen, die eine Kommunikation mit dem Bordcomputer im Fahrzeug durchführen kann. Das Palmtop-Handgerät 22 enthält Assistenzfunktionen in Form von Softwaremodulen, die aufgrund der über den Bus 10 zur Verfügung gestellten Daten aus dem Fahrzeug, beispielsweise Navigationsdaten, Zeitdaten etc., neue Informationen zusammenstellt und an einem eigenen Display 24 darstellt. Sobald das Palmtop-Handgerät 22 in die Halterung 20 eingesteckt wird, findet ein Datenabgleich und eine Kommunikation statt, die je nach vorhandenen Daten zu verschiedenen Ergebnissen führen kann. Dabei ist eine Bedienung über das Palmtop-Handgerät 22 selbst sowie über die Eingabeeinheit 12 möglich.

Je nach Kundenwunsch sind besondere Softwaremodule im Palmtop-Handgerät 22 und dem im Fahrzeug angeordneten Bordcomputer abgespeichert, so dass oben beschriebene Assistenzfunktionen aus den Daten im Fahrzeug und dem Palmtop-Handgerät 22 zur Verfügung gestellt werden können. Insgesamt ist damit ein Datentransfer zwischen einem Personal Data Assistant und einem Fahrzeug, sowie die mobile Nutzung von Navigationsdaten auch außerhalb des Fahrzeugs möglich. Durch die Assistenzfunktionen kann eine zusätzliche wertvolle Unterstützung für den Fahrer gewährleistet werden. Überdies vereinfacht sich die Routenplanung in die Navigationseingabe.

## Patentansprüche

1. Vorrichtung zur kombinierten Nutzung von Daten mit einer mobilen Datenverarbeitungsvorrichtung für persönliche Daten und einem in einem Fahrzeug fest installierten Bordcomputer mit einem Navigationssystem, wobei sowohl die mobile Datenverarbeitungsvorrichtung als auch der Bordcomputer geeignete Schnittstellen zur Kommunikation miteinander aufweisen und in wenigstens einer der beiden Datenverarbeitungsvorrichtung zumindest eine Assistenzfunktion vorgesehen ist, die eine Information für einen Benutzer unter Berücksichtigung von Daten aus der anderen Datenverarbeitungsvorrichtung zur Verfügung stellt.

2. Vorrichtung nach Anspruch 1,
**dadurch gekennzeichnet,**
**dass** die zumindest eine Assistenzfunktion zumindest durch ein Softwareprogramm realisiert ist.

3. Vorrichtung nach einem der Ansprüche 1 oder 2,
**dadurch gekennzeichnet,**
**dass** die Assistenzfunktion ohne Interaktion eines Benutzers aktivierbar ist.

4. Vorrichtung nach einem der vorhergehenden Ansprüche,
**dadurch gekennzeichnet,**
**dass** Ortsdaten von der mobilen Datenverarbeitungsvorrichtung in den Bordcomputer oder das Navigationssystem übertragbar sind und/oder dass Koordinateninformationen vom Navigationssystem in die mobile Datenverarbeitungsvorrichtung übertragbar sind.

5. Vorrichtung nach einem der vorhergehenden Ansprüche,
**dadurch gekennzeichnet,**
**dass** Ortsinformationen und Beschreibungsinformationen zu Objekten innerhalb eines bestimmbaren örtlichen Bereich von dem Navigationssystem oder dem Bordcomputer an die mobile Datenverarbeitungsvorrichtung übertragbar sind.

6. Vorrichtung nach einem der vorhergehenden Ansprüchen,
**dadurch gekennzeichnet,**
**daß** Zeitdaten von der mobilen Datenverarbeitungsvorrichtung an den Bordcomputer und/oder vom Bordcomputer an die mobile Datenverarbeitungsvorrichtung übertragbar sind.

7. Mobile Datenverarbeitungsvorrichtung für persönliche Daten mit einem Display zur Anzeige von Informationen,
**dadurch gekennzeichnet,**
**daß** eine geeignete Schnittstellen zur Kommunikation mit einem in einem Fahrzeug fest installierten Bordcomputer vorgesehen ist.

8. Mobile Datenverarbeitungsvorrichtung nach Anspruch 7,
**dadurch gekennzeichnet,**
**daß** zumindest eine Assistenzfunktion vorgesehen ist, die eine Information für einen Benutzer unter Berücksichtigung von Daten aus dem Bordcomputer zur Verfügung stellt.
